# EUROPÄISCHE PATENTSCHRIFT

(11) **EP 3 926 229 B1**
(45) Veröffentlichungstag und Bekanntmachung des Hinweises auf die Patenterteilung: **25.12.2024**
(21) Anmeldenummer: 21179902.8
(22) Anmeldetag: 16.06.2021
(51) Int. Cl.: F16P 3/12, F16P 3/14

(54) **SICHERHEITSEINRICHTUNG UND VERFAHREN ZUR ABSICHERUNG EINER MASCHINE**
SAFETY SENSOR AND METHOD FOR SECURING A MACHINE
DISPOSITIF DE SÉCURITÉ ET PROCÉDÉ DE SÉCURISATION D'UNE MACHINE

(30) Priorität: 17.06.2020 DE 102020116021
(43) Veröffentlichungstag der Anmeldung: 22.12.2021
(73) Patentinhaber: Pilz GmbH & Co. KG, 73760 Ostfildern (DE)
(72) Erfinder: Leska, Tobias, 01445 Radebeul (DE)
(74) Vertreter: Witte, Weller & Partner Patentanwälte mbB

(56) Entgegenhaltungen:
- GB-A- 913 718
- JP-U- S5 192 532
- KR-A- 20170 120 789
- US-A1- 2011 050 256
- US-A1- 2017 146 368
- US-A1- 2018 126 682

## Beschreibung

Die vorliegende Erfindung betrifft eine Sicherheitseinrichtung und ein Verfahren zur Absicherung einer Maschine, insbesondere einer Biegepresse, bei der ein erstes Maschinenteil eine Arbeitsbewegung entlang einer ersten Bewegungsrichtung gegen ein zweites Maschinenteil ausführt, um ein Werkstück zu verformen, welches sich beim Einwirken des ersten Maschinenteils zumindest teilweise in einer zweiten die erste Bewegungsrichtung kreuzenden Bewegungsrichtung auf das erste oder zweite Maschinenteil hinzu bewegt.

Ein bekanntes Verfahren zur spanlosen Bearbeitung von Werkstücken ist das Biegen oder Abkanten. Dabei wird ein im Bereich der Bearbeitungsstelle zunächst noch flaches Werkstück unter Druck umgeformt. Bei der maschinellen Bearbeitung werden hierzu Maschinen verwendet, die nachfolgend allgemein als Biegepressen bezeichnet sind. Die Erfindung ist jedoch nicht auf Biegepressen im engeren Sinne begrenzt und kann ebenso bei Abkantpressen, Stanzmaschinen, Schneidemaschinen und anderen Maschinen verwendet werden, bei denen zwei Maschinenteile eine gefahrbringende Arbeitsbewegung gegeneinander ausführen.

Bei einer Biegepresse erfolgt die Umformung des Werkstücks im Wesentlichen dadurch, dass das Werkstück mit einem Biegestempel gegen eine Matrize gepresst wird. Die gewünschte Formgebung lässt sich durch entsprechende Ausbildung des Biegestempels und der Matrize erreichen. Häufig ist der Biegestempel ein Werkzeug, das an einem ersten, beweglichen Maschinenteil angeordnet ist, während die Matrize an einem zweiten, feststehenden Maschinenteil sitzt. Da es jedoch nur auf die Relativbewegung der beiden Maschinenteile zueinander ankommt, kann alternativ auch die Matrize bewegt sein oder es können beide Maschinenteile gegeneinander bewegt werden. Die erfindungsgemäße Sicherheitsvorrichtung kann in allen genannten Fällen zur Anwendung kommen.

Es ist leicht nachvollziehbar, dass von einer Biegepresse eine erhebliche Gefahr für das Bedienpersonal ausgeht, insbesondere die Gefahr von Quetschungen oder sogar die Abtrennung von Körperteilen. Dementsprechend ist es bereits seit langem bekannt, Biegepressen und dergleichen mit Sicherheitseinrichtungen zu versehen, um Unfälle so weit wie möglich zu vermeiden. Gängig Sicherheitseinrichtungen für Biegepressen sind berührungsloswirkende Einrichtungen, wie Lichtschranken, Lichtgitter oder optische Systeme, die andere Objekte als das zu bearbeitende Werkstück im Arbeitsbereich der Maschine detektieren und an eine Steuerung melden. Als Reaktion auf die detektierten Objekte führt die Steuerung eine sicherheitsgerichtete Funktion aus. Beispielsweise kann die Steuerung die Maschinenbewegung stoppen oder zumindest verlangsamen.

Die gängigen Sicherheitseinrichtungen schützen das Bedienpersonal vor Verletzungen durch die beweglichen Maschinenteile. Eine weitere Gefahr kann jedoch auch von dem herzustellenden Werkstück ausgehen, wenn sich dieses bei der Umformung bewegt. Insbesondere beim Abkanten größerer Werkstücke bewegen sich diese mit hoher Geschwindigkeit außerhalb des eigentlichen Arbeitsbereichs der Biegepresse und stellen somit eine nicht zu unterschätzende Gefahr für das Bedienpersonal dar. Zudem besteht die Gefahr, dass ein unachtsamer Bediener zwischen dem Werkstück und der Biegemaschine ganz oder teilweise eingeklemmt wird. So muss bei komplexen Blechkonstruktionen bspw. das Werkstück während der Biegung geführt und vom Bediener gehalten werden. Hierbei kann es passieren, dass ein Finger oder die ganze Hand zwischen dem Werkstück und der Maschine außerhalb des eigentlichen Arbeitsbereichs der Maschine eingeklemmt wird.

Neben einer Verletzungsgefahr für den Bediener kann das sich bewegende Werkstück auch die Biegemaschine beschädigen oder selbst Schaden nehmen, wenn es mit der Maschine kollidiert.

EP 3 536 416 A1 schlägt hierzu ein Verfahren zur Überwachung einer Biegepresse vor, bei dem ein Bediener vor einem Einklemmen zwischen einem beim Biegevorgang hochgeschwenkten Abschnitt eines herzustellenden Werkstücks geschützt wird. Das Verfahren nach EP 3 536 416 A1 sieht vor, zusätzlich zu dem eigentlichen Arbeitsbereich zwischen den beweglichen Maschinenteilen der Presse, auch einen Bereich vor den beweglichen Maschinenteilen mittels einer weiteren Schutzeinrichtung zu überwachen. Die Schutzeinrichtung soll rechtzeitig vor einem möglichen Einklemmen warnen bzw. eine entsprechende sicherheitsgerichtet Reaktion auslösen. Ähnlich wie für die Überwachung des Arbeitsbereiches schlägt EP 3 536 416 A1 die Verwendung einer weiteren optischen Schutzeinrichtung vor mit einem Sender und einem Empfänger, zwischen denen ein oder mehrere Schutzbereiche definiert sind.

US 2018/126682 A1 zeigt eine zu EP 3 536 416 A1 ähnliche Einrichtung.

Bei optischen Schutzeinrichtungen, wie bspw. Lichtschranken oder optischen Systemen, wird der Schutzbereich maßgeblich durch den Strahlengang zwischen Sender und Empfänger definiert. Sender und Empfänger sind über Haltearme an der Maschine positioniert und so ausgerichtet, dass ein Strahlengang zwischen Sender und Empfängervor einer abzusichernden Oberfläche verläuft. Auf diese Weise lassen sich einfache Schutzräume vor den Maschinenteilen außerhalb des eigentlichen Arbeitsbereichs definieren. Komplexe Schutzräume, insbesondere Schutzräume, die an eine Kontur der Maschineteile angepasst sind, lassen sich hingegen, nur schwer oder gar nicht auf diese Weise realisieren. Oftmals werden bei optische Schutzeinrichtungen daher überdimensionierte Schutzräume definiert, um komplexe Arbeitsräume mit gradlinigen Schutzräumen zu erfassen.

Zudem ist es nicht möglich, bei jeder Biegepresse Haltearme für Sender und Empfänger an der Biegepresse anzubringen, da diese in der Regel über die Anlage hinausragen, was jedoch nicht immer möglich ist, insbesondere bei bereits existierenden Anlagen.

Es ist daher eine Aufgabe der vorliegenden Erfindung, eine Sicherheitseinrichtung und ein alternatives Verfahren zur Absicherung einer Maschine, bei der ein erstes Maschinenteil eine Arbeitsbewegung entlang einer ersten Bewegungsrichtung gegen ein zweites Maschinenteil ausführt, um ein Werkstück zu verformen, anzugeben. Insbesondere ist es eine Aufgabe ein flexibles Verfahren und eine flexible Sicherheitseinrichtung anzugeben, die die oben genannten Nachteile optischer Schutzeinrichtungen vermeidet und gleichzeitig eine ausreichende, umfassende und günstige Absicherung der Maschine ermöglicht.

US 2017/146368 A1 offenbart eine taktile Roboterhaut.

KR 2017 0120789 A zeigt eine Abkantpresse mit einem druckempfindlichen Sensor als Schutzeinrichtung zur Überwachung eines Arbeitsbereichs zwischen einem oberen Maschinenteil und einem unteren Maschinenteil der Abkantpresse. Die Schutzeinrichtung stoppt die Maschine, falls sich ein Gegenstand in Bezug auf die Bewegungsrichtung des oberen Maschinenteils auf einem Werkstück befindet

JP S51 92532 U zeigt eine weitere Schutzeinrichtung für eine Abkantpresse.

Gemäß einem Aspekt der vorliegenden Offenbarung wird diese Aufgabe gelöst durch ein Verfahren gemäß Anspruch 1.

Gemäß einem weiteren Aspekt der vorliegenden Offenbarung wird die Aufgabe gelöst durch eine Sicherheitseinrichtung gemäß Anspruch 10.

Es ist somit eine Idee der vorliegenden Erfindung eine Überwachungseinrichtung nicht vor einer Oberfläche des zu überwachenden Maschinenteils anzuordnen, sondern auf oder als Teil der zu überwachenden Fläche. Mit anderen Worten ausgedrückt, wird nicht der Bereich vor einer Oberfläche des Maschineteils indirekt über vorgelagerte Sicherheitsbereiche abgesichert, sondern die Fläche selbst. Dies ermöglicht, andere Technologien für die Überwachung einzusetzen, bspw. kontaktbasierte Sensoren, die unmittelbar auf der zu überwachenden Fläche angeordnet sind. Die Definition des zu überwachenden Bereichs kann somit flexibler und auf die jeweilige Maschine individuell angepasst werden. Eine Sensorik dieser Art kann somit einfach bei vorhandenen Maschinen nachgerüstet werden. Insbesondere vergrößert die Sicherheitseinrichtung nicht die äußere Abmessung der Maschine, da keine zusätzlichen Haltearme montiert werden müssen, die von der Maschine abstehen.

In einer weiteren Ausgestaltung kann der Sensor ein druckempfindlicher Sensor sein.

Druckempfindliche Sensoren können direkt einen Kontakt eines Objekts mit dem Maschinenteil erfassen und ein entsprechendes Signal bereitstellen. Druckempfindliche Sensoren sind bei der Überwachung einer Fläche weniger störanfällig als andere Schutzeinrichtungen, bspw. optische Einrichtungen, die eine Fläche nur indirekt überwachen. So reagieren druckempfindliche Sensoren nur dann, wenn tatsächlich ein Kontakt stattgefunden hat. Fehlauslösungen der Sicherheitsfunktion können so vermieden werden, wodurch die Verfügbarkeit erhöht wird.

In einer weiteren Ausgestaltung kann der druckempfindliche Sensor zumindest eine Elektrode aus einem textilen Werkstoff umfassen.

Ein textiler druckempfindlicher Sensor hat den Vorteil, dass dieser flexible wie eine Haut auf die zu überwachende Fläche gelegt werden kann. Auf diese Weise können auch unebene Flächen, zu Beispiel bei Maschinenteilen mit gewölbten Gehäusen überwacht werden.

In einer weiteren Ausgestaltung kann der Sensor ein kapazitiver Flächensensor sein. Ein kapazitiver Sensor hat den Vorteil, auch eine Annäherung detektieren zu können. Neben dem direkten Kontakt mit dem Maschinenteil kann auf diese Weise auch ein noch bevorstehender Kontakt erkannt werden. Die flächige Anordnung lässt auch hier die Definition eines auf den zu schützenden Maschinenteil angepassten Schutzraum zu.

Besonders bevorzugt kann mindestens eine Elektrode des kapazitiven Sensors ein Gehäuseteil des ersten Maschinenteils oder des zweiten Maschinenteils sein. Diese Ausgestaltung hat den Vorteil, dass das Gehäuse des zu überwachenden Maschinenteil ein Teil der Schutzeinrichtung wird. Der Sensor ist damit optimal an eine Gehäuseform des zu überwachenden Maschinenteils anpassbar. Auch kann in diesem Fall das Gehäuse die äußere Fläche des Sensors darstellen, während die weiteren Komponente im Inneren des Gehäuses des Maschinenteils untergebracht sein können. Auf diese Weise kann eine Fläche eines Maschinenteils überwacht werden, ohne dass der Sensor über das eigentliche Gehäuse der Maschine hinausgeht.

In einer weiteren Ausgestaltung kann der Sensor ein ortsauflösender Sensor sein, der eingerichtet ist, das Signal an die Steuerung basierend auf der Ortsauflösung zu generieren. Ein ortsauflösender Sensor ist ein Sensor mit einer aktiven Fläche, wobei der Sensor nicht nur einen Kontakt oder eine Annäherung an die aktive Fläche registrieren kann, sondern auch an welcher Stelle auf der aktiven Fläche dieser Kontakt oder die Annäherung erfolgt. Der zu überwachende Bereich kann auf diese Weise präzise definiert werden, wodurch eine individuelle Einstellung für eine Maschine möglich wird. Darüber hinaus ist der zu überwachende Bereich dynamisch veränderbar.

In einer weiteren Ausgestaltung kann die Steuerung als sicherheitsgerichtet Aktion die Arbeitsbewegung verlangsamen, insbesondere stoppen.

Die Steuerung kann somit im Wesentlichen die gleichen sicherheitsgerichteten Aktionen auslösen, wie eine Steuerung, die für eine Überwachung des tatsächlichen Wirkbereichs zuständig ist. Vorteilhaft kann dieselbe Steuerung daher sowohl für die Überwachung des tatsächlichen Wirkbereichs als auch für den Schutz vor den sich bewegenden Werkstücken verwendet werden.

In einer weiteren Ausgestaltung kann der Sensor zwischen mindestens zwei Stufen der Annäherung bzw. des Kontakts unterscheiden und der Steuerung melden.

Bei dieser Ausgestaltung sind somit unterschiedliche Stufen der Annäherung bzw. des Kontakts unterscheidbar. Diese Ausgestaltung trägt folglich dazu bei, die Flexibilität bei der Überwachung weiter zu erhöhen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine vereinfachte Darstellung einer Presse mit einer neuen Sicherheitseinrichtung,
Fig. 2 eine stark vereinfachte Darstellung eines ersten Ausführungsbeispiels der neuen Sicherheitseinrichtung in einer Seitenansicht der Presse aus Fig. 1, und
Fig. 3 eine stark vereinfachte Darstellung eines zweiten Ausführungsbeispiels der neuen Sicherheitseinrichtung in einer Seitenansicht der Presse aus Fig. 1.

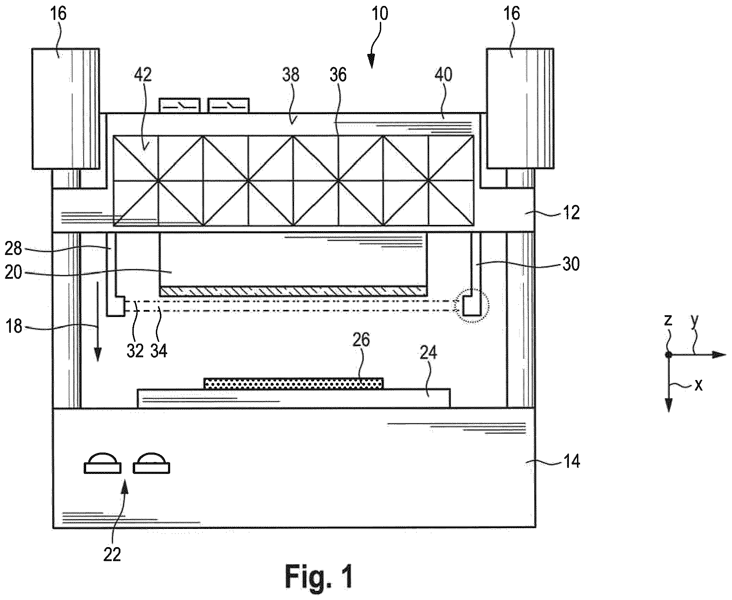

In Fig. 1 ist eine Presse als eine bevorzugte Maschine für die neue Sicherheitseinrichtung in ihrer Gesamtheit mit der Bezugsziffer 10 bezeichnet. Es sei jedoch darauf hingewiesen, dass die vorliegende Erfindung nicht nur bei Pressen, sondern auch bei anderen Maschinen eingesetzt werden kann, bei denen zwei Maschinenteile eine Arbeitsbewegung gegeneinander ausführen, um ein Werkstück zu verformen, welches sich beim Einwirken der Maschinenteile zumindest teilweise in einer zweiten die erste Bewegungsrichtung kreuzenden Bewegungsrichtung auf das erste oder zweite Maschinenteil hinzubewegt.

Die Presse 10 besitzt ein Oberwerkzeug und ein Unterwerkzeug. Typischerweise ist das Oberwerkzeug das bewegte, erste Maschinenteil 12 im Sinne der vorliegenden Erfindung und das Unterwerkzeug ist das zweite Maschinenteil 14. Bei den Bezugsziffern 16 sind zwei Antriebe vereinfacht dargestellt, mit denen das Oberwerkzeug 12 in Richtung eines Pfeils 18 gegen das Unterwerkzeug 14 verfahren werden kann. Am Oberwerkzeug 12 ist ein Biegewerkzeug 20 angeordnet. Bei der Bezugsziffer 22 ist ein Zwei-Hand-Schalter vereinfacht dargestellt, der mit beiden Händen betätigt werden muss, um einen Arbeitszyklus der Presse 10 zu starten und durchzuführen. Alternativ hierzu kann die Presse 10 auch über geeignete Fußschalter oder andere Betätigungselemente bedient werden.

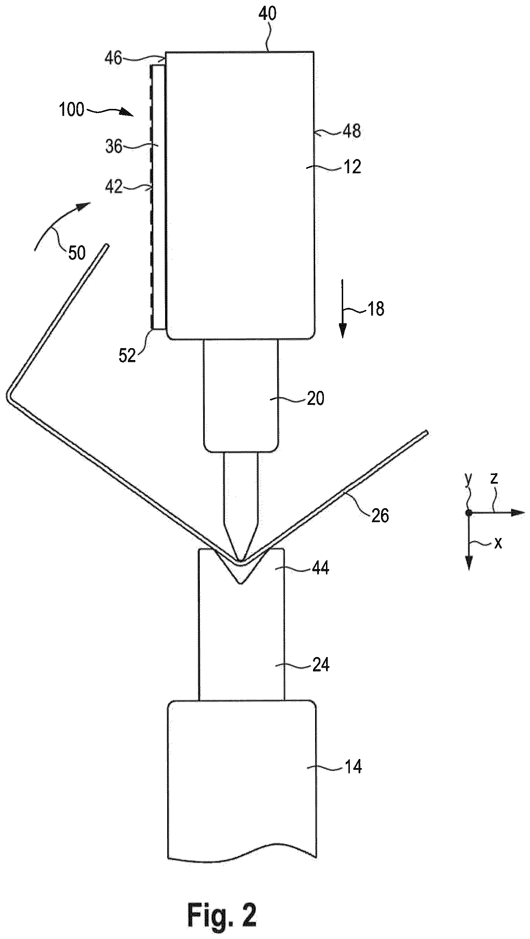

Auf dem Unterwerkzeug 14 ist eine Matrize 24 angeordnet, auf der ein Werkstück 26, beispielsweise ein Blechteil, liegt. Das untere Ende des Biegewerkzeugs 20 ist komplementär zu der Matrize 24 ausgebildet und ermöglicht eine spanlose Umformung des Werkstücks 26 beim Einfahren in die Matrize 24 (vgl. Fig. 2).

Mit den Bezugsziffern 28 und 30 sind zwei Halter bezeichnet, die links und rechts von dem Biegewerkzeug 20 an dem Oberwerkzeug 12 angeordnet sind. Am Ende des Halters 28 befindet sich ein Sender (hier nicht gesondert dargestellt) und am Ende des Halters 30 befindet sich mehrere Empfänger (nicht gesondert dargestellt). Sender und Empfänger bilden eine Lichtschrankenanordnung, die mehrere Lichtstrahlen 32, 33 erzeugt. Die Lichtstrahlen 32, 33 stellen eine erste und eine zweite optische Schranke dar. Sie verlaufen in etwa parallel zu der unteren Kante des Biegewerkzeugs 20, und werden bei einer Bewegung des oberen Maschinenteils mit diesem mitgeführt.

Die erste und zweite optische Schranke stellen eine Schutzeinrichtung im herkömmlichen Sinne dar. Die Schutzeinrichtung überwacht einen Arbeitsbereich zwischen dem oberen Maschinenteil 12 und dem unteren Maschinenteil 14 und stoppt die Maschine, falls sich in dem Wirkbereich der Maschinenteile andere Gegenstände als das Wertstück 26 befinden. Das Prinzip einer solchen Schutzeinrichtung ist grundsätzlich bekannt und wird im Folgenden nicht näher erläutert. Im Folgenden wird vielmehr eine weitere Schutzeinrichtung der Presse 10 beschrieben, die den Gesamtschutz der Presse komplementiert.

Die weitere Schutzeinrichtung stellt eine Sicherheitseinrichtung im Sinne dieser Offenbarung das. Sie ergänzt den Schutz vor Gefahren, die von den bewegten Maschinenteilen ausgehen, um einen Schutz vor Gefahren, die von bewegten Werkstücken ausgehen.

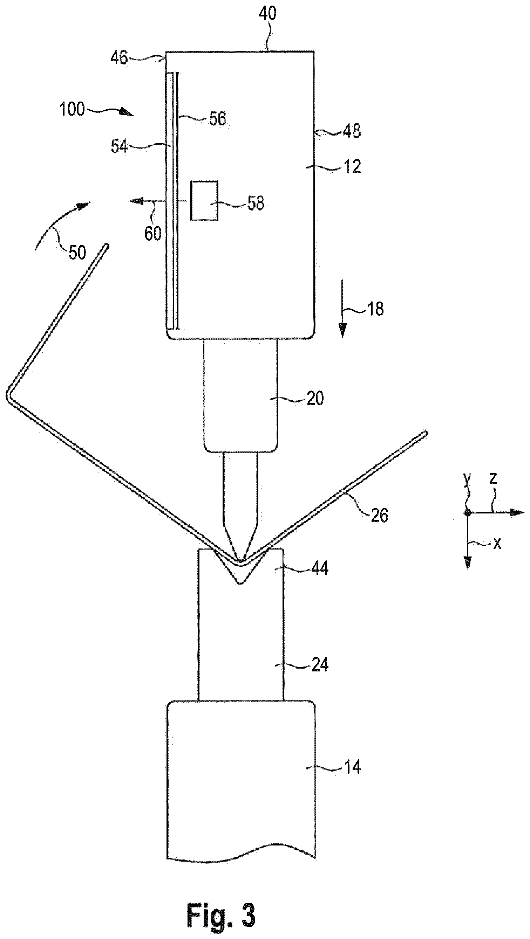

Die weitere Schutzeinrichtung weist einen Sensor 36 auf, der hier auf einer Oberfläche 38 des ersten Maschinenteils 12 angeordnet ist. Die Oberfläche 38 des ersten Maschinenteils 12 ist insbesondere eine Oberfläche eines Gehäuses 40, das den ersten Maschinenteil 12 umschließt. Der Sensor 36 hat eine aktive Sensorfläche 42, die sich über einen definierten Oberflächenabschnitt der Oberfläche 38 erstreckt. Die Sensorfläche 42 erstreckt sich zumindest über einen Oberflächenabschnitt auf der Oberfläche 38 des oberen Maschinenteils 12, gegen den Teile des zu bearbeitenden Werkstücks 26 stoßen können, wenn das Werkstück 26 durch Einwirken des Biegewerkzeugs 20 bewegt wird. Eine typische Bewegung eines Werkstücks 26 während des Biegevorgangs sowie die Funktion der Sicherheitseinrichtung wird im Folgenden mit Bezug auf Fig. 2 und 3 näher erläutert.

Die Sensorfläche 42 kann sich wie eine Haut auch über die gesamte Oberfläche 36 des oberen Maschinenteils 12 erstrecken und ist nicht auf einen begrenzten Oberflächenabschnitt eingeschränkt. Der Sensorfläche 42 kann flexibel ausgebildet sein und sich einer unebenen oder gekrümmten Oberfläche 38 des oberen Maschinenteils 12 anpassen. Insbesondere kann der Sensor 36 ein textiler Sensor sein, der glatt an der Oberfläche 36 aufliegt.

Der Sensor kann ein druckempfindlicher Sensor oder ein kapazitiver Sensor sein. Ein druckempfindlicher Sensor (auch als taktiler Sensor bezeichnet) kann einen Kontakt mit der Sensorfläche 42 registrieren. Ein kapazitiver Sensor kann eine Annäherung an die Sensorfläche 42 erfassen. Denkbar ist auch ein Sensor, der die Eigenschaften beider vorstehenden Sensorarten kombiniert, also ein Sensor der sowohl Kontakt mit als auch Annäherung an die Sensorfläche 42 erfasst.

Beispielhaft für einen druckempfindlichen Sensor wird im Folgenden ein taktiler Sensor beschrieben, der aus mehreren flexiblen Lagen gebildet ist. Der taktile Sensor kann eine erste Schicht, eine zweite Schicht und eine zwischen der ersten und zweiten Schicht liegende dritte Schicht umfassen. Die erste, zweite und dritte Schicht sind flächige Gebilde, die bündig übereinandergelegt einen druckempfindlichen Sensor mit einer Vielzahl von Sensorzellen bilden.

Die erste, zweite und dritte Schicht erstrecken sich folglich in der Fläche. Sie können tuch- bzw. folienartig ausgebildet sein. Die flexible Eigenschaft der einzelnen Schichten bleibt vorzugsweise auch beim Stapeln der Schichten erhalten, so dass der taktile Sensor insgesamt eine flexible Einheit bildet, die sich ähnlich wie eine Stoffbahn zusammenrollen und verarbeiten lässt.

Neben den drei für den druckempfindlichen Sensor wesentlichen Schichten können weitere Schichten vorgesehen sein, wie beispielsweise eine oberhalb und unterhalb angeordnete Deckschicht. Die Deckschicht kann aus wasserundurchlässigem Material sein und die drei Schichten vor äußeren Einfluss schützen. Insbesondere kann die Deckschicht die Schichten staub- und wasserdicht versiegeln.

Die einzelnen Schichten können in bevorzugten Ausführungsbeispielen wenige Millimeter dick sein, bspw. zwischen 0,5 mm bis 1,5 mm. In der Fläche kann der taktile Sensor hingegen nahezu beliebig von einigen Quadratzentimetern bis hin zu einigen Quadratmetern ausgedehnt sein.

Die erste Schicht und die zweite Schicht können textile Flächengebilde sein, in die elektrische Strukturen eingearbeitet sind. Beispielsweise sind die Schichten Gewebe, in die unter Verwendung von elektrisch leitfähigen Fäden und elektrisch nichtleitfähigen Fäden eine elektrische Struktur eingearbeitet wird. Die elektrische Struktur kann Elektroden definieren, die übereinandergelegt eine matrixartige Struktur bilden und eine Vielzahl von Sensorzellen ausprägen. Die erste Schicht und die zweite Schicht können gleichartig sein und aus einem einzelnen Werkstück gewonnen werden. Dies ermöglicht eine besonders kostengünstige und effiziente Herstellung. Zwischen die erste und zweite Schicht wird noch die dritte Schicht platziert, die ebenfalls aus einem flexiblen Material sein kann, jedoch nicht zwangsläufig gewoben sein muss. Die dritte Schicht kann ein gewobenes Microfasertuch sein, dessen Fasern mit einer leitfähigen Beschichtung überzogen sind. Die Beschichtung kann beispielsweise eine kohlenstoffbasierte Beschichtung oder eine metallische Beschichtung sein.

Ein flexibler, druckempfindlicher Sensor, wie vorstehend beschrieben kann, einfach in einem Stück auf die Oberfläche 38 des ersten Maschinenteils 12 aufgebracht werden. Denkbar ist jedoch auch, dass eine Vielzahl von einzelnen Drucksensoren zu einem Flächengebilde zusammengeschaltet wird, um einen Oberflächenabschnitt des ersten Maschinenteils 12 auszufüllen.

Es versteht sich, dass die vorstehende Beschreibung eines taktilen Sensors nur eine Möglichkeit für einen druckempfindlichen Sensor darstellt und die Erfindung nicht auf diese Ausgestaltung beschränkt ist.

Alternativ oder ergänzend kann der Sensor auch einen kapazitiven Sensor umfassen. Ein kapazitiver Sensor ist ein Sensor, welcher auf Basis der Veränderung der elektrischen Kapazität eines einzelnen Kondensators oder eines Kondensatorsystems arbeitet.

Ein kapazitiver Sensor kann als Drucksensor arbeiten und eine mögliche Alternative zu dem oben beschriebenen Drucksensor darstellen. Bei einem kapazitiven Drucksensor wird die Kapazitätsänderung infolge des Durchbiegens einer Membran und der resultierenden Änderung des Plattenabstandes als Sensoreffekt ausgewertet.

Der kapazitive Sensor kann jedoch auch als kapazitiver Näherungsschalter arbeiten. Ein kapazitiver Näherungsschalter arbeitet berührungsfrei, d. h. ohne direkten Kontakt, und detektiert eine Annäherung eines leitenden oder nichtleitenden Gegenstandes. Der kapazitive Näherungsschalter nutzt die sich bei Annäherung ändernde elektrische Kapazität einer Messelektrode zur Umgebung oder einer Referenzelektrode aus. In der Regel umfasst der Sensor einen RC-Oszillator, dessen frequenzbestimmende Kapazität teilweise vom zu detektierenden Medium bzw. der Umgebung gebildet wird.

Wie beim druckempfindlichen Sensor kann sich auch ein kapazitiver Sensor über einen Oberflächenabschnitt des ersten Maschinenteils erstrecken, indem eine oder mehrere Sensorelektroden über die Fläche verteilt werden. Denkbar ist auch, dass das Gehäuse, oder ein Abschnitt davon, selbst eine Elektrode des kapazitiven Sensors bildet und somit ein Teil des Sensors wird. Auf diese Weise kann der Sensor besonders gut an das Gehäuse angepasst werden.

Es versteht sich, dass die beiden vorstehenden Sensorarten kombinierbar sind, um sowohl Kontakt als auch Annäherung registrieren und unterscheiden zu können. Denkbar ist auch, dass die Sensoren ortsauflösend sind und neben Kontakt und/oder Annäherung auch bestimmen, an welcher Stelle auf der Oberfläche ein Kontakt oder eine Annäherung stattgefunden hat. Hierfür können die Sensoren unmittelbar durch ihre zellenartige Struktur für eine ortsauflösende Auswertung ausgelegt sein. Alternativ kann aber auch eine Vielzahl von Sensoren kachelartig auf dem zu überwachenden Oberflächenabschnitt befestigt sein, um eine derartige Auflösung zu ermöglichen. Die Ortsauflösung ermöglicht unter anderem, dass die zu überwachende Fläche dynamisch anpassbar ist.

Im Folgenden wird mit Bezug auf Fig. 2 und Fig. 3 das Verfahren und die neue Sicherheitseinrichtung näher erläutert. Fig. 2 zeigt ein erstes Ausführungsbeispiel mit einem druckempfindlichen Sensor und Fig. 3 ein zweites Ausführungsbeispiel mit einem kapazitiven Sensor.

Sowohl Fig. 2 als auch Fig. 3 zeigen einen Ausschnitt der Presse 10 in einer stark vereinfachten Seitenansicht. Teile mit gleichen Bezugszeichen wie in Fig. 1 bezeichnen gleiche Teile.

In der Seitenansicht sind ein oberer Maschinenteil und ein unterer Maschinenteil (erste und zweiter Maschinenteil 12, 14), das Biegewerkzeug 20, die Matrize 24 sowie das Wertstück 26 gezeigt. Das obere Maschinenteil 12 und das untere Maschinenteil 14 haben ein Gehäuse 40 mit einer Frontseite 46 und eine gegenüberliege Rückseite 48. Die Frontseite 46 ist dem Bediener der Maschine zugewandt.

Wie bereits in Bezug auf Fig. 1 beschrieben, bewegen sich für einen Biegevorgang das obere Maschinenteil 12 und das untere Maschinenteil 14 aufeinander zu (erste Bewegungsrichtung 18). Dabei wird das Werkstück 26 von dem Biegewerkzeug 20, welches an dem oberen Maschinenteil 12 befestigt ist, in die am unteren Maschinenteil 14 angeordnete Matrize 24 gedrückt und das Werkstück 26 gemäß dem in der Matrize 24 eingearbeiteten Profil 44 verformt.

Beim Verformen bewegt sich das Werkstück 26. Abschnitte des Werkstücks 26 können sich dabei auf das obere oder untere Maschinenteil 12, 14, hinzubewegen und diesen ggf. berühren. Genauer gesagt, kann sich das Werkstück auf die Frontseite 46 des ersten und zweiten Maschinenteils zubewegen.

Die Frontseite 46 ist mit der Sicherheitseinrichtung 100 bestückt. Die Sicherheitseinrichtung 100 umfasst einen Sensor 36, der sich in der Fläche über einen Oberflächenabschnitt des Gehäuses 40 erstreckt. Insbesondere bedeckt der Sensor 36 einen dem Bediener der Maschine zugewandten Oberflächenabschnitt der Frontseite 46. Die aktive Sensorfläche 42 des Sensors 36 zeigt somit zum Bediener der Maschine, in diesem Fall in Z-Richtung.

Mit dem Pfeil mit der Bezugsziffer 50 ist eine Bewegungsrichtung (zweite Bewegungsrichtung) eines Abschnitts des Werkstücks 26 angedeutet. Die zweite Bewegungsrichtung 50 scheidet die erste Bewegungsrichtung 18, in der sich die Maschinenteile 12, 14 bewegen. Genauer gesagt, bewegt sich hier ein Abschnitt des Werkstücks 26 entlang der zweiten Bewegungsrichtung auf die Frontseite 46 des Gehäuses 40 des oberen Maschinenteils 12 zu. Der Sensor 36 ist so auf einem Oberflächenabschnitt angeordnet, dass er zwischen dem sich bewegenden Abschnitt des Werkstücks 36 und dem Gehäuse 40 des oberen Maschinenteils 12 liegt. Wenn sich daher das Werkstück 26 weiter entlang der zweiten Bewegungsrichtung 50 bewegen sollte (hier nicht dargestellt), würde es zu einem Kontakt mit dem Gehäuse 40 des ersten Maschinenteils 12 kommen. Hierbei könnte das Gehäuse 40 und/oder das Werkstück 26 beschädigt werden. Ferner könnten Körperteile zwischen dem sich bewegenden Abschnitt des Werkstücks 26 und dem Gehäuse 40 eingeklemmt werden.

Um dies zu verhindern, ist der Sensor 36 zwischen dem Gehäuse 40 und dem sich bewegenden Abschnitt des Werkstücks 26 angeordnet. Der Sensor 36 kann das Gehäuse 40 über einen gesamten Oberflächenabschnitt bedecken, der als mögliche Kontaktfläche bei einer Kollision mit dem Werkstück 26 in Frage kommt. Kollidiert der sich bewegende Abschnitt des Werkstücks 26 mit der Sensorfläche 42 kann der Sensor 36 diesen Kontakt erfassen und ein entsprechendes Signal erzeugen. Basierend auf dem Signal kann eine sicherheitsgerichtete Reaktion ausgelöst werden, insbesondere ein Not-Halt der Maschine 10 bzw. der sich bewegenden Maschinenteile 12, 14 durch Abschalten der Antriebe 16.

Die Sicherheitseinrichtung 100 kann selbst über entsprechende sichere Einrichtungen verfügen, um die sicherheitsgerichtete Reaktion auszulösen. Bevorzugt jedoch erzeugt die Sicherheitseinrichtung 100 nur ein entsprechendes Ausgangssignal und überträgt dieses an eine Steuerung (hier nicht dargestellt), welche die sicherheitsgerichtete Reaktion für die Sicherheitseinrichtung 100 ausführt. Die Steuerung kann dieselbe Steuerung sein, welche die sicherheitsgerichtete Reaktion im Zug der Überwachung des Wirkbereichs der Maschine ausführt. Insbesondere ist die Steuerung eine fehlersichere Steuerung, bspw. vom Typ PSS, wie sie von der Anmelderin vertrieben wird.

Das Ausgangssignal kann als Freigabesignal ausgebildet sein. Ein Freigabesignal wird immer dann übertragen, wenn der Sensor einerseits ordnungsgemäß arbeitet und andererseits kein Kontakt detektiert worden ist. Über ein Freigabesignal kann erreicht werden, dass die Maschine 10 nur anläuft oder in Betrieb bleibt, wenn das Freigabesignal von der Steuerung empfangen wird. In allen anderen Fällen, insbesondere wenn kein Signal oder ein fehlerhaftes Signal anliegt, stoppt die Steuerung die Maschine 10 oder verhindert deren Start.

Der Sensor 36 ist in dem Ausführungsbeispiel gemäß Fig. 2 ein druckempfindlicher Sensor. Der druckempfindliche Sensor kann der zuvor beschriebene, mehrschichtige, taktile Sensor sein. Besonders bevorzugt weist der taktile Sensor zusätzlich mindestens eine weitere Deckschicht 52 auf, welche die eigentliche Sensorik im Inneren des Sensors 36 schützt. Die Deckschicht 52 kann, wie hier in Fig. 2 angedeutet, eine Gummimatte mit Noppen sein, wie sie bspw. von Fußmatten bekannt ist. Die Gummimatte bedeckt den Sensor 36 und schützt diesen vor äußeren Einflüssen. Gleichzeitig verstärkt die Gummimatte das Gehäuse 40, sodass durch die Verwendung der Sicherheitseinrichtung 100 ein zusätzlicher Schutz des Gehäuses möglich ist, der bei einem rein optischen System nicht gegeben ist.

Zusätzlich kann eine weitere Zwischenlage (hier nicht dargestellt) vorgesehen sein, die zwischen dem Sensor 36 und dem Gehäuse 40, genauer gesagt der Frontseite 46 des Gehäuses, angeordnet ist. Die Zwischenlage kann aus einem flexiblen, komprimierbaren Material sein sowie in der Größer skalierbar sein. Die Zwischenlage kann dazu dienen, entsprechend des Maschinennachlaufes vom Zeitpunkt des Erkennens der Betätigung des Sensors 36 bis zum Stillstand der Maschine 10 eine mechanische Pufferzone aufzubauen, um ein Quetschen der Gliedmaßen aufgrund des Nachlaufes zu verhindern.

In einem bevorzugten Ausführungsbeispiel können sichere, taktile Fußmatten, wie sie bspw. von der Anmelderin unter der Bezeichnung SafetyMat vertrieben werden, als Sensorik für die Sicherheitseinrichtung 100 verwendet werden. Da diese alle sicherheitsrelevanten Funktionen bereits integriert haben, müssen diese lediglich an geeigneten Oberflächenabschnitten des Gehäuses 40 befestigt werden.

Es versteht sich, dass die vorliegende Erfindung nicht auf die hier aufgeführten druckempfindlichen Sensoren beschränkt ist, und dass das Prinzip der Sicherheitseinrichtung 100 auch mit anderen Sensoren umgesetzt werden kann.

Fig. 3 zeigt ein zweites Ausführungsbeispiel der Sicherheitseinrichtung 100. Teile mit gleichen Bezugszeichen wie in Fig. 2 bezeichnen gleiche Teile und werden im Folgenden nicht erneut beschrieben.

Das Ausführungsbeispiel gemäß Fig. 3 unterscheidet sich vom Ausführungsbeispiel gemäß Fig. 2 durch die Art des Sensors 36. Im zweiten Ausführungsbeispiel ist der Sensor 36 ein kapazitiver Sensor.

Der kapazitive Sensor ist hier stark vereinfacht dargestellt. Das Prinzip des kapazitiven Sensors beruht auf der Veränderung der elektrischen Kapazität eines einzelnen Kondensators oder eines Kondensatorsystems. Vereinfacht ist ein solcher Kondensator hier durch eine erste Elektrode 54 und eine zweite Elektrode 56 angedeutet.

Zusätzlich weist der kapazitive Sensor einen Oszillator 58 auf, der mit einer der Elektroden 54, 56 gekoppelt ist, welche die frequenzbestimmende Kapazität des Oszillator 58 bildet. Wenn sich ein Objekt, wie bspw. ein Abschnitt des Werkstücks 26, der Elektrodenanordnung nähert, verstimmt dies messtechnisch erfassbar den Oszillator 58 und eine mit Bezug auf das Ausführungsbeispiel gemäß Fig. 2 beschriebene Reaktion kann ausgelöst werden.

Durch die Ausgestaltung und Anordnung der Elektroden 54, 56 kann ferner eine gewisse Richtwirkung erzielt werden, sodass von dem Sensor 36 in Wesentlichen nur eine Annäherung aus Z Richtung registriert wird, wie hier mit dem Pfeil mit Bezugszeichen 60 angedeutet ist. Es versteht sich, dass neben der Annäherung an die Elektrode 54 auch ein Kontakt mit dieser von dem kapazitiven Sensor registriert werden kann.

Besonders bevorzugt kann ein Teil des Gehäuses 40, wie in Fig. 3 angedeutet, als erste Elektrode 54 dienen. Auf diese Weise ist die Form der Sensorfläche 42 optimal an das Gehäuse 40 anpassbar. Darüber hinaus erstreckt sich bei dieser Ausgestaltung der Sensor 36 nicht über das Gehäuse 40 des ersten Maschinenteils 12 hinaus. Alle weiteren Komponenten des kapazitiven Sensors können von dem Gehäuse 40 geschützt im Inneren angeordnet sein. Der kapazitive Sensor kann ferner eine Deckschicht (hier nicht dargestellt) aufweisen, um den gleichen Effekt zu erzielen, wie in Bezug auf das Ausführungsbeispiel gemäß Fig. 2 beschrieben worden ist.

Es versteht sich, dass der kapazitive Sensor auch in einer anderen Form ausgebildet sein kann, und die Sicherheitsreinrichtung 100 nicht auf die hier gezeigte Form beschränkt ist.

Insgesamt ist es denkbar, dass in einem weiteren Ausführungsbeispiel die unterschiedliche Sensorik gemäß den Ausführungsbeispielen nach Fig. 2 und 3 miteinander kombiniert wird. Zudem kann das Prinzip auch mit anderen in der Fläche ausgedehnte Sensoren verwirklicht werden, wenn diese einen Kontakt oder eine Annäherung an die Sensorfläche erfassen können.

Die Sicherheitseinrichtung 100 ist auch nicht auf die hiergezeigte Anordnung des Sensors 36 an dem ersten Maschinenteil 12 beschränkt. Vielmehr kann der Sensor 36 auch an dem zweiten Maschinenteil 14 oder einer anderen Stelle in gleicher Weise angeordnet sein.

Insoweit beschränken die vorstehenden beschriebenen Ausführungsbeispiele nicht den Schutzbereich der vorliegenden Erfindung. Dieser wird alleine durch die nachfolgenden Ansprüche bestimmt.

## Patentansprüche

1. Verfahren zum Absichern einer Maschine (10), bei der ein erstes Maschinenteil (12) eine Arbeitsbewegung entlang einer ersten Bewegungsrichtung (18) gegen ein zweites Maschinenteil (14) ausführt, um ein Werkstück (26) zu verformen, welches einen Abschnitt aufweist, der sich beim Einwirken des ersten Maschinenteils (12) zumindest teilweise in einer zweiten die erste Bewegungsrichtung (18) kreuzenden Bewegungsrichtung (50) auf eine Frontseite (46) des ersten Maschinenteils (12) oder des zweiten Maschinenteils (14) hinzu bewegt, wobei auf einem Oberflächenabschnitt der Frontseite (46) eines Gehäuses (40) des ersten Maschinenteils (12) oder des zweiten Maschinenteils (14) ein Sensor (36) mit einer über den Oberflächenabschnitt ausgedehnten Sensorfläche (42) angeordnet ist, wobei der Sensor (36) so auf dem Oberflächenabschnitt angeordnet ist, dass er zwischen dem sich bewegenden Abschnitt des Werkstücks (36) und dem Gehäuse (40) liegt und die Sensorfläche (42) zu einem Bediener der Maschine (10) weist, wobei die Sensorfläche (42) eine Annäherung und/oder einen Kontakt des sich auf das erste Maschinenteil (12) oder das zweite Maschinenteil (14) zubewegenden Abschnitts des Werkstücks (26) oder eines damit verbundenen Objekts registriert und ein Signal an eine Steuerung absetzt, und wobei die Steuerung als Reaktion auf das Signal eine sicherheitsgerichtete Aktion auslöst.

2. Verfahren nach Anspruch 1, wobei der Sensor (36) ein druckempfindlicher Sensor ist.

3. Verfahren nach einem der Ansprüche 1 oder 2, wobei der Sensor (36) zumindest eine Elektrode aus einem textilen Werkstoff umfasst.

4. Verfahren nach einem der Ansprüche 1 bis 3, wobei der Sensor (36) ein kapazitiver Sensor ist.

5. Verfahren nach Anspruch 4, wobei der kapazitive Sensor mindestens eine Elektrode umfasst, die ein Teil eines Gehäuses (40) des ersten Maschinenteils (12) oder des zweiten Maschinenteils (14) ist.

6. Verfahren nach einem der Ansprüche 1 bis 5, wobei der Sensor (36) ein ortsauflösender Sensor ist, der eingerichtet ist, der Annäherung und/oder dem Kontakt einen Ort auf der Sensorfläche (42) zuzuordnen und das Signal an die Steuerung basierend auf der Zuordnung zu generieren.

7. Verfahren nach einem der Ansprüche 1 bis 6, wobei der Oberflächenabschnitt eine unebene Fläche aufweist und der Sensor an eine Kontur der unebenen Fläche anpassbar ist.

8. Verfahren nach einem der Ansprüche 1 bis 7, wobei die Steuerung als sicherheitsgerichtet Aktion die Arbeitsbewegung verlangsamt und/oder stoppt.

9. Verfahren nach einem der Ansprüche 1 bis 8, wobei der Sensor (36) eingerichtet ist, zwischen mindestens zwei Stufen der Annäherung bzw. des Kontakts zu unterscheiden und die jeweils erkannte Stufe an die Steuerung zu melden.

10. Sicherheitseinrichtung (100) zur Absicherung einer Maschine (10), bei der ein erstes Maschinenteil (12) eine Arbeitsbewegung entlang einer ersten Bewegungsrichtung (18) gegen ein zweites Maschinenteil (14) ausführt, um ein Werkstück (26) zu verformen, welches einen Abschnitt aufweist, der sich beim Einwirken des ersten Maschinenteils (12) zumindest teilweise in einer zweiten die erste Bewegungsrichtung (18) kreuzenden Bewegungsrichtung (50) auf eine Frontseite (46) des ersten Maschinenteils (12) oder des zweiten Maschinenteils (14) hinzu bewegt, umfassend: einen auf einem Oberflächenabschnitt der Frontseite (46) eines Gehäuses (40) des ersten Maschinenteils (12) oder des zweiten Maschinenteils (14) anbringbaren Sensor (36) mit einer über den Oberflächenabschnitt ausgedehnten Sensorfläche (42), wobei der Sensor (36) so auf dem Oberflächenabschnitt angeordnet ist, dass er zwischen dem sich bewegenden Abschnitt des Werkstücks (36) und dem Gehäuse (40) liegt und die Sensorfläche (42) zu einem Bediener der Maschine (10) weist, und wobei die Sensorfläche (42) eingerichtet ist, eine Annäherung und/oder einen Kontakt des sich auf das erste Maschinenteil oder das zweite Maschinenteil (14) zubewegenden Werkstücks (26) oder eines damit verbundenen Objekts zu registrieren, ein entsprechendes Signal zu erzeugen und an eine Steuerung zu übertragen.

## Claims

1. Method for safeguarding a machine (10), in which a first machine part (12) executes a working movement along a first direction of movement (18) against a second machine part (14) in order to deform a workpiece (26) which has a section which, when the first machine part (12) acts, moves at least partially towards a front side (46) of the first machine part (12) or of the second machine part (14) in a second direction of movement (50) which crosses the first direction of movement (18), wherein a sensor (36) is arranged on a surface portion of the front side (46) of a housing (40) of the first machine part (12) or of the second machine part (14), having a sensor surface (42) extending over the surface portion, wherein the sensor (36) is being arranged on the surface portion such that it lies between the moving portion of the workpiece (36) and the housing (40), and the sensor surface (42) faces an operator of the machine (10), and wherein the sensor surface (42) registers an approach and/or a contact of the section of the workpiece (26) or an object connected thereto moving towards the first machine part (12) or the second machine part (14) and sends a signal to a controller, the controller triggering a safety-related action in response to the signal.

2. Method according to claim 1, wherein the sensor (36) is a pressure-sensitive sensor.

3. Method according to claims 1 or 2, wherein the sensor (36) comprises at least one electrode made of a textile material.

4. Method according to any one of claims 1 to 3, wherein the sensor (36) is a capacitive sensor.

5. Method according to claim 4, wherein the capacitive sensor comprises at least one electrode which is a part of the housing (40) of the first machine part (12) or the second machine part (14).

6. Method according to any one of claims 1 to 5, wherein the sensor (36) is a spatially resolving sensor configured to assign a location on the sensor surface (42) to the approach and/or the contact and to generate the signal to the controller based on this location assignment.

7. Method according to any one of claims 1 to 6, wherein the surface portion has an uneven surface and the sensor is adaptable to a contour of the uneven surface.

8. Method according to any one of claims 1 to 7, wherein the controller slows down and/or stops the working movement as a safety-related action.

9. Method according to any one of claims 1 to 8, wherein the sensor (36) is configured to distinguish between at least two stages of approach or contact and to report the respectively recognized stage to the controller.

10. Safety device (100) for safeguarding a machine (10), in which a first machine part (12) executes an working movement along a first direction of movement (18) against a second machine part (14) in order to deform a workpiece (26) which has a section which, when the first machine part (12) acts, moves at least partially towards a front side (46) of the first machine part (12) or of the second machine part (14) in a second direction of movement (50) which crosses the first direction of movement (18), the safety device comprising:
a sensor (36) mountable on a surface portion of the front side (46) of a housing (40) of the first machine part (12) or the second machine part (14) and having a sensor surface (42) extending over the surface portion, wherein the sensor (36) is arranged on the surface portion such that it lies between the moving portion of the workpiece (36) and the housing (40) and the sensor surface (42) faces an operator of the machine (10), and
wherein the sensor surface (42) is configured to register an approach and/or a contact of the workpiece (26) moving towards the first machine part (12) or the second machine part (14) or of an object connected thereto, to generate a corresponding signal and to transmit it to a controller.

## Revendications

1. Procédé permettant de sécuriser une machine (10), dans lequel une première partie de machine (12) exécute un déplacement de travail le long d'une première direction de déplacement (18) à l'encontre d'une seconde partie de machine (14) afin de déformer une pièce (26) qui présente une section qui, lors de l'action de la première partie de machine (12), se déplace au moins partiellement dans une seconde direction de déplacement (50) qui croise la première direction de déplacement (18) vers une face frontale (46) de la première partie de machine (12) ou de la seconde partie de machine (14), dans lequel un capteur (36) est disposé sur une section de surface de la face frontale (46) d'un boîtier (40) de la première partie de machine (12) ou de la seconde partie de machine (14), ledit capteur comportant une surface de capteur (42) se prolongeant sur la section de surface, dans lequel le capteur (36) est disposé sur la section de surface de sorte qu'il se trouve entre la section se déplaçant de la pièce (36) et le boîtier (40) et que la surface de capteur (42) est orientée vers un opérateur de la machine (10), dans lequel la surface de capteur (42) enregistre un rapprochement et/ou un contact de la section de la pièce (26), ou d'un objet relié à celle-ci, se déplaçant vers la première partie de machine (12) ou vers la seconde partie de machine (14), et envoie un signal à une commande, et dans lequel la commande déclenche une action de sécurité en réponse au signal.

2. Procédé selon la revendication 1, dans lequel le capteur (36) est un capteur sensible à la pression.

3. Procédé selon l'une des revendications 1 ou 2, dans lequel le capteur (36) comprend au moins une électrode constituée d'un matériau textile.

4. Procédé selon l'une des revendications 1 à 3, dans lequel le capteur (36) est un capteur capacitif.

5. Procédé selon la revendication 4, dans lequel le capteur capacitif comprend au moins une électrode qui fait partie d'un boîtier (40) de la première partie de machine (12) ou de la seconde partie de machine (14).

6. Procédé selon l'une des revendications 1 à 5, dans lequel le capteur (36) est un capteur à résolution spatiale qui est configuré pour associer un emplacement sur la surface de capteur (42) au rapprochement et/ou au contact et pour générer le signal à la commande sur la base de l'association.

7. Procédé selon l'une des revendications 1 à 6, dans lequel la section de surface présente une surface non plane et le capteur peut être adapté à un contour de la surface non plane.

8. Procédé selon l'une des revendications 1 à 7, dans lequel la commande, en tant qu'action de sécurité, ralentit et/ou arrête le déplacement de travail.

9. Procédé selon l'une des revendications 1 à 8, dans lequel le capteur (36) est configuré pour faire la distinction entre au moins deux niveaux de rapprochement ou de contact et pour signaler le niveau respectivement reconnu à la commande.

10. Dispositif de sécurité (100) permettant de sécuriser une machine (10), dans lequel une première partie de machine (12) exécute un déplacement de travail le long d'une première direction de déplacement (18) à l'encontre d'une seconde partie de machine (14) afin de déformer une pièce (26) qui présente une section qui, lors de l'action de la première partie de machine (12), se déplace au moins partiellement dans une seconde direction de déplacement (50) qui croise la première direction de déplacement (18) vers une face frontale (46) de la première partie de machine (12) ou de la seconde partie de machine (14), comprenant : un capteur (36) pouvant être monté sur une section de surface de la face frontale (46) d'un boîtier (40) de la première partie de machine (12) ou de la seconde partie de machine (14), ledit capteur comportant une surface de capteur (42) se prolongeant sur la section de surface, dans lequel le capteur (36) est disposé sur la section de surface de sorte qu'il se trouve entre la section se déplaçant de la pièce (36) et le boîtier (40) et que la surface de capteur (42) est orientée vers un opérateur de la machine (10), et dans lequel la surface de capteur (42) est configurée pour enregistrer un rapprochement et/ou un contact de la pièce (26), ou d'un objet relié à celle-ci, se déplaçant vers la première partie de machine ou vers la seconde partie de machine (14), générer un signal correspondant et le transmettre à une commande.
